(19) Europäisches Patentamt
European Patent Office
Office européen des brevets

(11) **EP 4 080 235 B1**

(12) **EUROPEAN PATENT SPECIFICATION**

(45) Date of publication and mention
of the grant of the patent:
**28.02.2024 Bulletin 2024/09**

(21) Application number: **20912776.0**

(22) Date of filing: **08.01.2020**

(51) International Patent Classification (IPC):
*G01S 5/06* (2006.01)     *G01S 7/40* (2006.01)
*G01S 13/42* (2006.01)     *G01S 13/86* (2006.01)
*G01S 13/931* (2020.01)

(52) Cooperative Patent Classification (CPC):
**G01S 7/4086; G01S 7/4021; G01S 7/4026;
G01S 13/42; G01S 13/931;** G01S 13/865;
G01S 13/867

(86) International application number:
**PCT/CN2020/070880**

(87) International publication number:
**WO 2021/138836 (15.07.2021 Gazette 2021/28)**

(54) **NEAR-FIELD ESTIMATION METHOD AND APPARATUS**

VERFAHREN UND VORRICHTUNG ZUR NAHFELDSCHÄTZUNG

PROCÉDÉ ET APPAREIL D'ESTIMATION DE CHAMP PROCHE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.10.2022 Bulletin 2022/43**

(73) Proprietor: **Huawei Technologies Co., Ltd.
Longgang
Shenzhen, Guangdong 518129 (CN)**

(72) Inventors:
• **LI, Dejian
  Shenzhen, Guangdong 518129 (CN)**
• **ZHU, Jintai
  Shenzhen, Guangdong 518129 (CN)**
• **WANG, Ben
  Shenzhen, Guangdong 518129 (CN)**

(74) Representative: **Epping - Hermann - Fischer
Patentanwaltsgesellschaft mbH
Schloßschmidstraße 5
80639 München (DE)**

(56) References cited:
CN-A- 101 776 746     CN-A- 102 629 161
CN-A- 107 064 861     US-A1- 2015 198 709

• **CHARGE PASCAL ET AL: "Near field targets
localization using bistatic MIMO system with
spherical wavefront based model", 2017 25TH
EUROPEAN SIGNAL PROCESSING
CONFERENCE (EUSIPCO), EURASIP, 28 August
2017 (2017-08-28), pages 2408-2412,
XP033236371, DOI:
10.23919/EUSIPCO.2017.8081642 [retrieved on
2017-10-23]**
• **DU JINZE ET AL: "Bistatic MIMO System with
Uniform Circular Arc Arrays for Single near Field
Target Localization", 2018 13TH APCA
INTERNATIONAL CONFERENCE ON CONTROL
AND SOFT COMPUTING (CONTROLO), IEEE, 4
June 2018 (2018-06-04), pages 357-360,
XP033388796, DOI:
10.1109/CONTROLO.2018.8439787 [retrieved on
2018-08-17]**
• **ZHANG YIMIN ET AL: "MIMO radar exploiting
narrowband frequency-hopping waveforms",
2010 18TH EUROPEAN SIGNAL PROCESSING
CONFERENCE, IEEE, 25 August 2008
(2008-08-25), pages 1-5, XP032760862, ISSN:
2219-5491 [retrieved on 2015-04-03]**

- Ji Quan: "The Realization of Radar Reconnaissance System's Phase Calibr Ation Method of Near-Field", Hangtian Dianzi Duikang - Aerospace Electronic Warfare, vol. 29, no. 5, 28 October 2013 (2013-10-28), pages 55-57, XP009529254, ISSN: 1673-2421

**Description**

**TECHNICAL FIELD**

This application relates to the wireless field, and in particular, to a near field estimation method and apparatus.

**BACKGROUND**

Because of an all-weather detection capability, a vehicle-mounted millimeter-wave radar is one of indispensable sensors in the field of autonomous driving. A multiple-input multiple-output (multiple-input multiple-output, MIMO) radar technology is used to obtain a large aperture of an array when a quantity of antennas is limited, to obtain high angular resolution. A time-division multiplexing (time-division multiplexing, TDM) MIMO transmission mode has become an important research direction of the vehicle-mounted millimeter-wave MIMO radar due to advantages such as a simple hardware implementation and a low mutual coupling effect. A frequency modulated continuous waveform (frequency modulated continuous waveform, FMCW) is a transmit waveform commonly used in a vehicle-mounted radar in TDM-MIMO.

A vehicle-mounted radar completes positioning of a target through distance measuring and angle measuring of a target, that is, through angle of arrival (angle of arrival, AOA) estimation. During angle estimation, in a far field condition, a wavefront (wavefront) may be usually assumed to be a plane wave. However, in a near field condition, the wavefront needs to be considered as a spherical wave. For example, for a MIMO radar on a 77 GHz frequency band, if there are 256 horizontal virtual antennas and an aperture of the virtual antenna is approximately 0.5 m, when a distance between the radar and a target is greater than 64.2 m, AOA estimation is applicable to the far field condition is met, or when the distance is less than 64.2 m, AOA estimation is applicable to the near field condition. In this case, AOA estimation in the near field condition needs to be applied to targets within 64.2 m.

A fast Fourier transform (fast fourier transform, FFT) algorithm is an angle estimation algorithm commonly used in an existing vehicle-mounted radar, but the FFT can be used only for far field estimation, and cannot be used for near field estimation. In a near field AOA algorithm in the conventional technology, calculation of a spherical wave path difference is complex, and is not applicable to any quantity of antennas. It is difficult to perform near field calibration of an antenna in an anechoic chamber of a limited size, and it is difficult to generate a steering vector (steering vector) for each antenna array element. Consequently, AOA estimation accuracy is reduced.

CHARGE PASCAL ET AL: "Near field targets localization using bistatic MIMO system with spherical wavefront based model" describes a subspace based near field targets localization method with bistatic MIMO system consisting of uniform linear transmitting and receiving arrays. The method uses the spherical wavefront based exact model to improve the estimation accuracy.

DU JINZE ET AL: "Bistatic MIMO System with Uniform Circular Arc Arrays for Single near Field Target Localization" describes a method for active localization by using a bistatic MIMO system with uniform circular arc transmitting and receiving arrays.

ZHANG YIMIN ET AL: "MIMO radar exploiting narrowband frequency-hopping waveforms" describes narrowband frequency-hopping radars for the detection and localization of moving and vibrating targets.

**SUMMARY**

The invention is set out in the appended set of claims. This application provides a near field estimation method and apparatus. According to the near field estimation method in this application, actual physical locations of a plurality of transmit antennas are considered, so that an angle of arrival of a target can be estimated more accurately, and angular spectrum dispersion does not occur.

**BRIEF DESCRIPTION OF DRAWINGS**

FIG. 1 is a schematic diagram of a structure of an autonomous vehicle according to an embodiment of this application;
FIG. 2 is a schematic diagram of a scenario to which an embodiment of this application is applicable;
FIG. 3 is a schematic diagram of an antenna array of a MIMO radar to which an embodiment of this application is applicable;
FIG. 4 is a schematic diagram of an angle of arrival estimation method according to an embodiment of this application;
FIG. 5 is a schematic diagram of a method for estimating an angle of arrival based on a wave path difference according to an embodiment of this application;

FIG. 6 is a schematic diagram of an angle of arrival estimation result according to an embodiment of this application;

FIG. 7 is a schematic diagram of a virtual receive antenna according to an embodiment of this application;

FIG. 8 is a schematic diagram of an angle of arrival estimation apparatus according to an embodiment of this application; and

FIG. 9 is a schematic diagram of a structure of an angle of arrival estimation apparatus according to an embodiment of this application.

## DESCRIPTION OF EMBODIMENTS

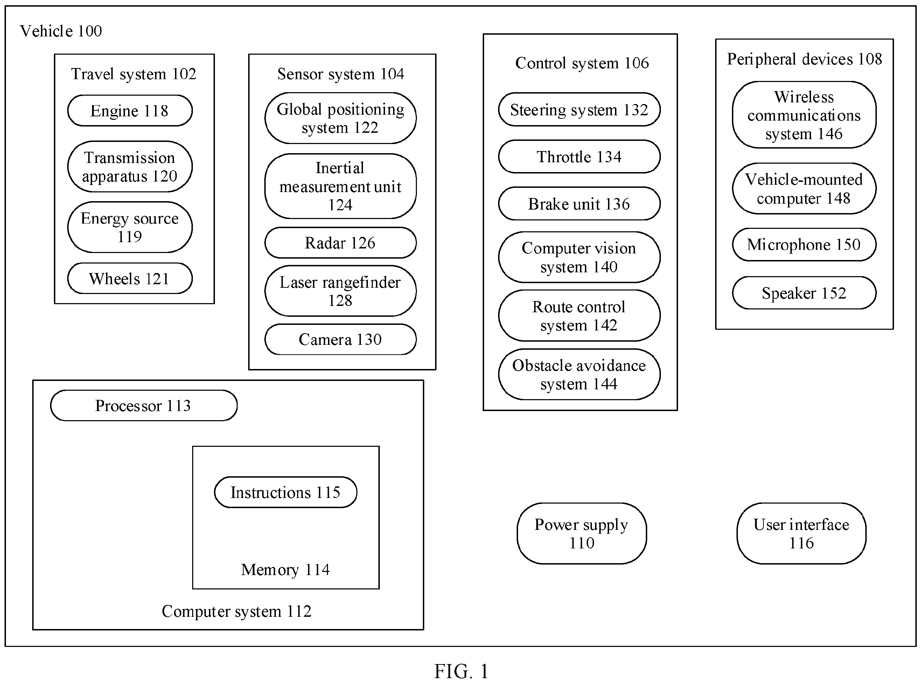

FIG. 1 is a functional block diagram of a vehicle 100 according to an embodiment of this application. In an embodiment, the vehicle 100 is configured to be in a fully or partially autonomous driving mode. For example, the vehicle 100 in the automatic driving mode may control the vehicle 100. A manual operation may be performed to determine current statuses of the vehicle and an ambient environment of the vehicle, determine possible behavior of at least one another vehicle in the ambient environment, determine a confidence level corresponding to a possibility that the another vehicle performs the possible behavior, and control the vehicle 100 based on determined information. When the vehicle 100 is in the autonomous driving mode, the vehicle 100 may be set to operate without interacting with a person.

The vehicle 100 may include various subsystems, for example, a travel system 102, a sensor system 104, a control system 106, one or more peripheral devices 108, a power supply 110, a computer system 112, and a user interface 116. Optionally, the vehicle 100 may include more or fewer subsystems, and each subsystem may include a plurality of elements. In addition, each subsystem and element of the vehicle 100 may be interconnected in a wired or wireless manner.

The travel system 102 may include a component providing power motion to the vehicle 100. In an embodiment, the travel system 102 may include an engine 118, an energy source 119, a transmission apparatus 120, and wheels/tires 121. The engine 118 may be an internal combustion type engine, a motor, an air compression engine, or another type of engine combination, for example, a hybrid engine including a gasoline engine and a motor, or a hybrid engine including an internal combustion type engine and an air compression engine. The engine 118 converts the energy source 119 into mechanical energy.

Examples of the energy source 119 include gasoline, diesel, other oil-based fuels, propane, other compressed gas-based fuels, ethanol, solar panels, batteries, and other power sources. The energy source 119 may also provide energy to another system of the vehicle 100.

The transmission apparatus 120 may transmit mechanical power from the engine 118 to the wheels 121. The transmission apparatus 120 may include a gearbox, a differential, and a drive shaft. In an embodiment, the transmission apparatus 120 may further include another component, for example, a clutch. The drive shaft may include one or more shafts that may be coupled to one or more wheels 121.

The sensor system 104 may include several sensors that sense information about the ambient environment of the vehicle 100. For example, the sensor system 104 may include a positioning system 122 (where the positioning system may be a GPS system, a BeiDou system, or another positioning system), an inertial measurement unit (inertial measurement unit, IMU) 124, a radar 126, a laser rangefinder 128, and a camera 130. The sensor system 104 may further include a sensor (for example, an in-vehicle air quality monitor, a fuel gauge, or an engine oil thermometer) of an internal system of the monitored vehicle 100. Sensor data from one or more of these sensors can be used to detect an object and corresponding features (a position, a shape, a direction, a speed, and the like) of the object. Such detection and recognition are key functions of a safe operation of the autonomous vehicle 100.

The positioning system 122 may be configured to estimate a geographic location of the vehicle 100. The IMU 124 is configured to sense location and orientation changes of the vehicle 100 based on an inertial acceleration. In an embodiment, the IMU 124 may be a combination of an accelerometer and a gyroscope.

The radar 126 may sense an object in the ambient environment of the vehicle 100 by using an electromagnetic wave signal. In some embodiments, in addition to sensing the object, the radar 126 may further be configured to sense a speed and/or a moving direction of the object.

The laser rangefinder 128 may sense, by using a laser, an object in an environment in which the vehicle 100 is located.

In some embodiments, the laser rangefinder 128 may include one or more laser sources, a laser scanner, one or more detectors, and another system component.

The camera 130 may be configured to capture a plurality of images of the ambient environment of the vehicle 100. The camera 130 may be a static camera or a video camera.

The control system 106 controls operations of the vehicle 100 and components of the vehicle 100. The control system 106 may include various elements, including a steering system 132, a throttle 134, a brake unit 136, a sensor fusion algorithm 138, a computer vision system 140, a route control system 142, and an obstacle avoidance system 144. The steering system 132 is operable to adjust an advancing direction of the vehicle 100. For example, in an embodiment, the steering system 132 may be a steering wheel system.

The throttle 134 is configured to: control an operating speed of the engine 118 and further control a speed of the vehicle 100.

The brake unit 136 is configured to control the vehicle 100 to decelerate. The brake unit 136 may use friction to slow down the wheels 121. In another embodiment, the brake unit 136 may convert kinetic energy of the wheels 121 into a current. Alternatively, the brake unit 136 may reduce a rotational speed of the wheel 121 in another form to control the speed of the vehicle 100.

The computer vision system 140 is operable to process and analyze the image captured by the camera 130, to recognize the object and/or a feature in the ambient environment of the vehicle 100. The objects and/or features may include traffic signals, road boundaries, and obstacles. The computer vision system 140 may use an object recognition algorithm, a structure from motion (Structure from Motion, SFM) algorithm, video tracking, and other computer vision technologies. In some embodiments, the computer vision system 140 may be configured to: draw a map for an environment, track an object, estimate a speed of the object, and the like.

The route control system 142 is configured to determine a running route of the vehicle 100. In some embodiments, the route control system 142 may determine the running route of the vehicle 100 with reference to data from the sensor 138, the GPS 122, and one or more predetermined maps.

The obstacle avoidance system 144 is configured to recognize, evaluate, and avoid or bypass, in another manner, a potential obstacle in an environment of the vehicle 100.

Certainly, for example, the control system 106 may add or alternatively include components in addition to those shown and described. Alternatively, the control system 106 may not include some of the foregoing components.

The vehicle 100 interacts with an external sensor, another vehicle, another computer system, or a user by using the peripheral device 108. The peripheral device 108 may include a wireless communications system 146, a vehicle-mounted computer 148, a microphone 150, and/or a speaker 152.

In some embodiments, the peripheral device 108 provides a means for a user of the vehicle 100 to interact with the user interface 116. For example, the vehicle-mounted computer 148 may provide information to the user of the vehicle 100. The user interface 116 may further operate the vehicle-mounted computer 148 to receive user input. The vehicle-mounted computer 148 may be operated by using a touchscreen. In another case, the peripheral device 108 may provide a means for the vehicle 100 to communicate with another device located in the vehicle. For example, the microphone 150 may receive audio (for example, a voice command or another audio input) from the user of the vehicle 100. Similarly, the speaker 152 may output audio to the user of the vehicle 100.

The wireless communications system 146 may communicate with one or more devices directly or through a communications network. For example, the wireless communications system 146 may perform communication through a 3G cellular network such as CDMA, EVDO, or GSM/GPRS, perform communication through a 4G cellular network such as LTE, or perform communication through a 5G cellular network. The wireless communications system 146 may communicate with a wireless local area network (wireless local area network, WLAN) through Wi-Fi. In some embodiments, the wireless communications system 146 may directly communicate with a device through an infrared link, Bluetooth, or ZigBee. Other wireless protocols, for example, various vehicle communications systems, such as the wireless communications system 146, may include one or more dedicated short range communications (DSRC) devices, and these devices may include public and/or private data communication between the vehicle and/or roadside stations.

The power supply 110 may provide power to various components of the vehicle 100. In an embodiment, the power supply 110 may be a rechargeable lithium-ion or lead-acid battery. One or more battery packs of the battery may be configured to provide power to the various components of the vehicle 100. In some embodiments, the power supply 110 and the energy source 119 may be implemented together, for example, in some pure electric vehicles.

Some or all of functions of the vehicle 100 are controlled by the computer system 112. The computer system 112 may include at least one processor 113. The processor 113 executes instructions 115 stored in a non-transitory computer-readable medium such as a memory 114. The computer system 112 may be alternatively a plurality of computing devices that control an individual component or a subsystem of the vehicle 100 in a distributed manner.

The processor 113 may be any conventional processor, for example, a commercially available CPU. Alternatively, the processor may be a dedicated device such as an ASIC or another hardware-based processor. Although FIG. 1 functionally illustrates the processor, the memory, and another element of the computer 110 in a same block, a person of ordinary skill in the art should understand that the processor, the computer, or the memory may actually include a plurality of processors, computers, or memories that may or may not be stored in a same physical housing. For example, the memory may be a hard disk drive, or another storage medium that is located in a housing different from that of the computer 110. Therefore, it is understood that a reference to the processor or the computer includes a reference to a set of processors or computers or memories that may or may not operate in parallel. Different from using a single processor to perform the steps described herein, some components such as a steering component and a deceleration component may include respective processors. The processor performs only computation related to a component-specific function.

In various aspects described herein, the processor may be located far away from the vehicle and perform wireless communication with the vehicle. In another aspect, some of processes described herein are performed on a processor disposed inside the vehicle, while others are performed by a remote processor. The processes include necessary steps for performing a single operation.

In some embodiments, the memory 114 may include the instruction 115 (for example, program logic), and the instructions 115 may be executed by the processor 113 to perform various functions of the vehicle 100, including the functions described above. The memory 114 may also include additional instructions, including instructions used to send data to, receive data from, interact with, and/or control one or more of the travel system 102, the sensor system 104, the control system 106, and the peripheral device 108.

In addition to the instructions 115, the memory 114 may further store data, such as a road map, route information, and a location, a direction, a speed, and other such vehicle data of the vehicle, and other information. Such information may be used by the vehicle 100 and the computer system 112 when the vehicle 100 operates in an autonomous mode, a semi-autonomous mode, and/or a manual mode.

Entry: A description related to an actual invention may be inserted. For example, if an actual invention point is about speed adjustment, it is necessary to describe how to perform speed adjustment; and if an actual invention point is about lane controlling, it is necessary to describe how to perform lane controlling, which data is required, and how to perform the lane controlling based on the data.

The user interface 116 is configured to provide information to or receive information from the user of the vehicle 100. Optionally, the user interface 116 may include one or more input/output devices in a set of peripheral devices 108, for example, the wireless communications system 146, the vehicle-mounted computer 148, the microphone 150, and the speaker 152.

The computer system 112 may control the functions of the vehicle 100 based on inputs received from the various subsystems (for example, the travel system 102, the sensor system 104, and the control system 106) and from the user interface 116. For example, the computer system 112 may use input from the control system 106 to control the steering unit 132 to avoid an obstacle detected by the sensor system 104 and the obstacle avoidance system 144. In some embodiments, the computer system 112 is operable to provide control over many aspects of the vehicle 100 and the subsystems of the vehicle 100.

Optionally, one or more of the foregoing components may be installed separately from or associated with the vehicle 100. For example, the memory 114 may be partially or completely separated from the vehicle 100. The foregoing components may be communicatively coupled together in a wired and/or wireless manner.

Optionally, the foregoing components are merely examples. In actual application, components in the foregoing modules may be added or deleted based on an actual requirement. FIG. 1 should not be understood as a limitation on this embodiment of this application.

An autonomous vehicle traveling on a road, for example, the vehicle 100, may recognize an object in an ambient environment of the autonomous vehicle, to determine to adjust a current speed. The objects may be another vehicle, a traffic control device, or another type of object. In some examples, each recognized object may be considered independently, and based on features of each object, such as a current speed of the object, an acceleration of the object, and a spacing between the object and the vehicle, may be used to determine the speed to be adjusted by the automatic driving vehicle.

Optionally, the autonomous vehicle 100 or a computing device associated with the autonomous vehicle 100 (for example, the computer system 112, the computer vision system 140, or the memory 114 in FIG. 1) may predict behavior of the identified object based on a feature of the identified object and a state of the surrounding environment (for example, traffic, rain, and ice on a road). Optionally, recognized objects depend on behavior of each other, and therefore, all the recognized objects may be considered together to predict behavior of a single recognized object. The vehicle 100 can adjust the speed of the vehicle 100 based on the predicted behavior of the identified object. In other words, the autonomous vehicle can determine, based on the predicted behavior of the article, a stable state to which the vehicle needs to be adjusted (for example, speeding up, deceleration, or stop). In this process, another factor, for example, a transverse location of the vehicle 100 on a road on which the vehicle 100 runs, a curvature of the road, or proximity between static and dynamic objects may also be considered, to determine the speed of the vehicle 100.

In addition to providing an instruction for adjusting the speed of the autonomous vehicle, the computing device may further provide an instruction for modifying a steering angle of the vehicle 100, so that the autonomous vehicle follows a given trajectory and/or maintains safe lateral and longitudinal distances between the autonomous vehicle and an object (for example, a car in an adjacent lane on the road) near the autonomous vehicle.

The vehicle 100 may be a car, a truck, a motorcycle, a bus, a boat, an airplane, a helicopter, a lawn mower, a recreational vehicle, a playground vehicle, a construction device, a trolley, a golf cart, a train, a handcart, or the like. This is not specifically limited in this embodiment of this application.

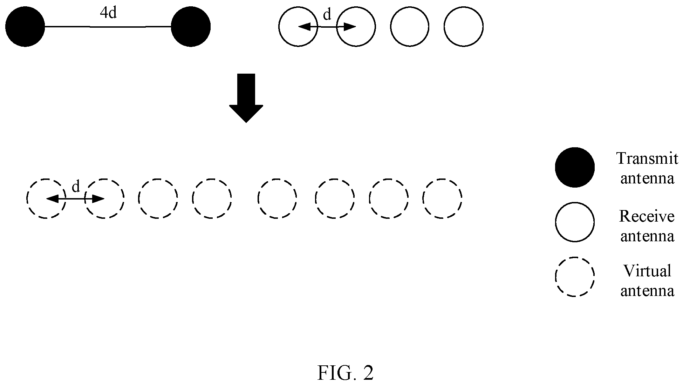

FIG. 2 is a schematic diagram of a scenario to which an embodiment of this application is applicable.

It should be understood that, in a far field virtual MIMO radar, based on an assumption that a wavefront of a received electromagnetic wave is a plane wave, the wavefront refers to a surface formed by particles that just start to displace at a moment at which an electromagnetic wave radiated by the radar to the outside is propagated in a medium.

As shown in FIG. 2, intervals between transmit (transmit, TX) antennas may be equivalently converted into virtual receive (receive, RX) antennas, to form a virtual single-input multiple-output (single-input multiple-output, SIMO) radar with one TX antenna and a plurality of virtual RX antennas. However, in near field AOA estimation, intervals between TX antennas cannot be directly converted into virtual RX antennas. A distance between each transmit antenna and a target and a distance between each receive antenna and the target need to be separately calculated, and then a distance between each transmit antenna and each receive antenna is calculated. A virtual receive antenna is a corresponding receive antenna that receives a signal when each of a plurality of transmit antennas in an antenna array of a MIMO radar transmits a signal.

This application provides an angle of arrival estimation method. Different from a conventional method, in the near field estimation method in this application, actual physical locations of a plurality of transmit antennas are considered. It should be understood that, in the technical solution of this application, for transmit antennas at an even interval dt and receive antennas at an even interval dr, or for transmit antennas and receive antennas that are unevenly distributed, a wave path difference between a first virtual receive antenna and a virtual receive antenna including transmit antennas and receive antennas may be calculated, to perform AOA estimation.

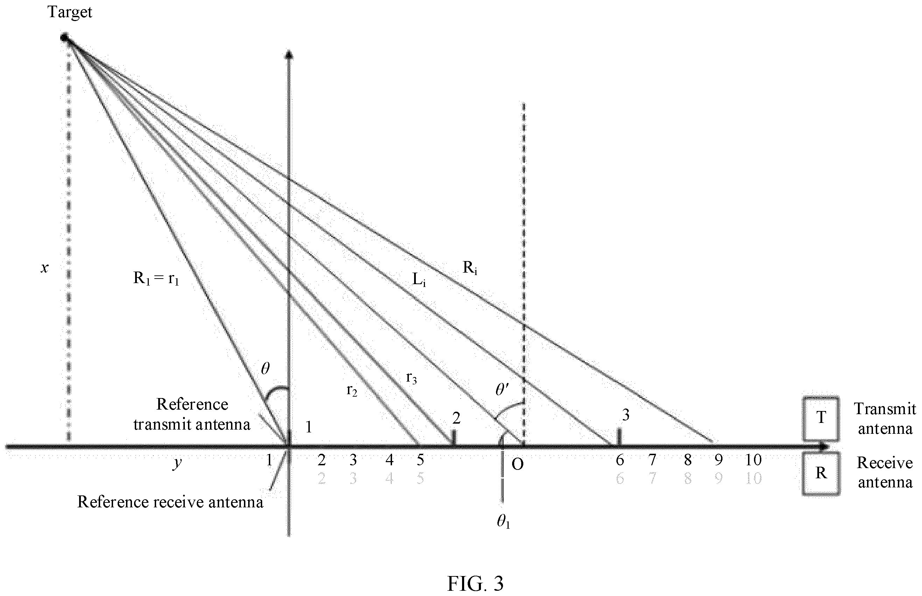

FIG. 3 is a schematic diagram of an antenna array of a MIMO radar to which an embodiment of this application is applicable. The MIMO radar may be the radar 126 shown in FIG. 1. In this application, TX antennas and RX antennas that are evenly distributed are used as an example. However, the antenna array may also be applied to TX antennas and RX antennas that are unevenly distributed. This is not limited in this application.

Assuming that the antenna array of the MIMO radar includes N receive antennas (N is a positive integer, and an even interval between adjacent receive antennas is $d_r$) and M transmit antennas (M is a positive integer, and an even interval between adjacent transmit antennas is $d_t$ when M is greater than 1), M×N virtual receive antennas may be obtained through combination. A distance between an $i^{th}$ transmit antenna and a target (target) is $L_i$, where $i$ = 1, 2, ..., $M$, and a distance between a $j^{th}$ receive antenna and the target is $R_j$, where $j$ = 1,2,..., $N$.

It is assumed that the quantity N of receive antennas is 10, and the quantity M of transmit antennas is 3. FIG. 3 is a schematic diagram of signal propagation of three transmit antennas and 10 receive antennas. In the figure, it is assumed that a first transmit antenna and a first receive antenna have a same horizontal location. However, in actual application, the first transmit antenna and the first receive antenna may have different horizontal locations. This is not limited in this application.

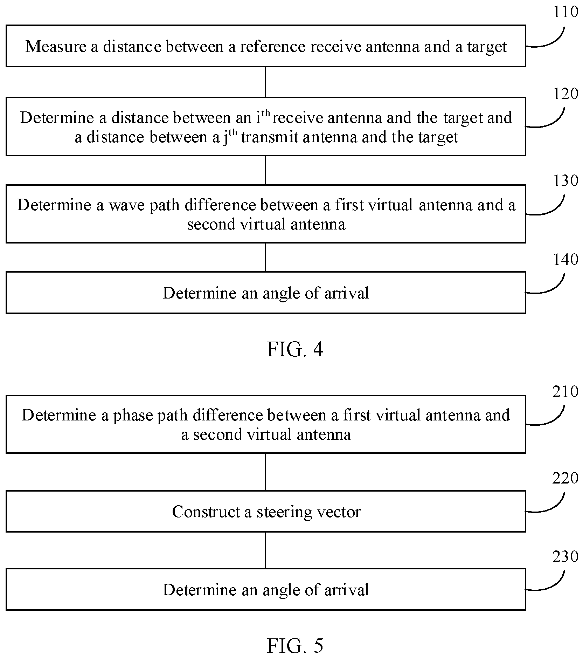

FIG. 4 is a schematic diagram of an angle of arrival estimation method according to an embodiment of this application. 110. Measure a distance between a reference receive antenna and a target.

It should be understood that, as shown in FIG. 3, 30 virtual receive antennas are determined based on the three transmit antennas and the 10 receive antennas. A first virtual receive antenna is one of the 30 virtual receive antennas, and the first virtual receive antenna is determined based on a reference transmit antenna and the reference receive antenna. An antenna may be randomly selected as the reference transmit antenna or the reference receive antenna. For convenience of signal processing, a leftmost antenna or a rightmost antenna in an antenna array may be selected as the reference transmit antenna or the reference receive antenna.

Optionally, a first distance $R_1$ between the reference receive antenna and the target may be measured in an anechoic chamber.

Optionally, a fourth distance $L_1$ between the reference transmit antenna and the target may be obtained by using a physical geometric relationship between a first transmit antenna and a first receive antenna. The first transmit antenna may be a first transmit antenna from left to right in the M transmit antennas. In an antenna array of a MIMO radar, it is usually considered that a horizontal distance between the first transmit antenna and the first receive antenna is very small. Therefore, $L_1 \approx R_1 = r_1$. Herein, $r_1$ is a measured value of the distance between the reference receive antenna and the target, that is, a specific value.

120. Determine a second distance $R_j$ between a $j^{th}$ receive antenna and the target based on the first distance $R_1$ between the reference receive antenna and the target.

Optionally, the second distance $R_j$ between the $j^{th}$ receive antenna and the target may be determined based on the first distance $R_1$ between the reference receive antenna and the target and a fifth distance between the reference receive antenna and the $j^{th}$ receive antenna corresponding to a second virtual receive antenna.

Optionally, when the receive antennas are arranged at equal intervals, the second distance $R_j$ between the $j^{th}$ receive antenna and the target may be obtained based on the first distance $R_1$ between the reference receive antenna and the target and a known interval $d_r$ between the receive antennas. It should be understood that when the receive antennas are unevenly arranged, the second distance $R_j$ between the $j^{th}$ receive antenna and the target may be determined based on a horizontal distance between the $j^{th}$ receive antenna and the reference receive antenna, that is, the fifth distance. Optionally, a third distance $L_i$ between an $i^{th}$ transmit antenna and the target may be determined based on the fourth distance $L_1$ between the reference transmit antenna and the target and a sixth distance between the reference transmit antenna and the $i^{th}$ transmit antenna corresponding to the second virtual receive antenna.

Optionally, when the transmit antennas are arranged at equal intervals, the third distance $L_i$ between the $i^{th}$ transmit antenna and the target may be obtained based on the fourth distance $L_1$ between the reference transmit antenna and the target and a known interval $d_t$ between the transmit antennas. It should be understood that when the transmit antennas are unevenly arranged, the third distance $L_i$ between the $i^{th}$ transmit antenna and the target may be determined based on a horizontal distance between the $i^{th}$ transmit antenna and the reference transmit antenna, that is, the sixth distance. As shown in FIG. 3, x and y may be represented by using a geometric relationship as follows:

$$x = r_1 \cos \theta$$

$$y = r_1 \sin \theta$$

The second distance $R_j$ between the $j^{th}$ receive antenna and the target, and the third distance $L_i$ between the $i^{th}$ transmit antenna and the target are respectively represented as follows:

$$L_i = \sqrt{r_1^2 \cos^2 \theta + \left(r_1 \sin \theta + id_t\right)^2}$$

$$R_j = \sqrt{r_1^2 \cos^2 \theta + \left(r_1 \sin \theta + jd_r\right)^2}$$

Herein, $\theta$ is an angle of arrival of the first virtual receive antenna, and is a to-be-estimated unknown quantity.

130. Determine a wave path difference between the first virtual receive antenna and the second virtual receive antenna based on a wave path of the first virtual receive antenna and a wave path of the second virtual receive antenna.

The first virtual receive antenna is determined based on the reference transmit antenna and the reference receive antenna, and the second virtual receive antenna is determined based on the $i^{th}$ transmit antenna and the $j^{th}$ receive antenna. The wave path difference between the first virtual receive antenna and the second virtual receive antenna may be determined based on the first distance $R_1$ between the reference receive antenna and the target and the second distance $R_j$ between the $j^{th}$ receive antenna and the target.

It should be understood that, a first wave path corresponding to the first virtual receive antenna determined based on the reference transmit antenna and the reference receive antenna is a distance traveled by an electromagnetic wave emitted by the reference transmit antenna arrives at the reference receive antenna after the electromagnetic wave is reflected by the target. A second wave path corresponding to the second virtual receive antenna determined based on the $i^{th}$ transmit antenna and the $j^{th}$ receive antenna is a distance traveled by an electromagnetic wave emitted by the $i^{th}$ transmit antenna arrives at the $j^{th}$ receive antenna after the electromagnetic wave is reflected by the target. Optionally, the first wave path may be determined based on the first distance $R_1$ between the reference receive antenna and the target and the fourth distance $L_1$ between the reference transmit antenna and the target. The second wave path may be determined based on the second distance $R_j$ between the $j^{th}$ receive antenna and the target and the third distance $L_i$ between the $i^{th}$ transmit antenna and the target.

A wave path difference, that is, $(L_i + R_j) - (L_1 + R_1)$, between the second wave path of the second virtual receive antenna and the first wave path of the first virtual receive antenna may be calculated based on a sum, that is, $(L_i + R_j)$, of the distance between the $i^{th}$ transmit antenna and the target and the distance between the $j^{th}$ receive antenna and the target.

For example, in FIG. 3, a second wave path of a second virtual receive antenna including a second transmit antenna and a fifth receive antenna is $L_2 + R_5$, a third distance $L_2$ between the second transmit antenna and the target may be equal to $r_2$, and a second distance $R_5$ between the fifth receive antenna and the target may be equal to $r_3$. Herein, $r_2$ is a calculated value of the distance between the second transmit antenna and the target, and $r_3$ is a calculated value of a distance between a third receive antenna and the target. The wave path difference between the second virtual receive antenna and the first virtual receive antenna including the reference transmit antenna and the reference receive antenna is $r_2 + r_3 - 2 \times r_1$. Details are as follows:

$$\left(L_i + R_j\right) - \left(L_1 + R_1\right)$$

$$= \sqrt{r_1^2 \cos^2 \theta + \left(r_1 \sin \theta + id_t\right)^2} + \sqrt{r_1^2 \cos^2 \theta + \left(r_1 \sin \theta + jd_r\right)^2} - 2r_1$$

140. Determine an angle of arrival based on the wave path difference between the first virtual receive antenna and the second virtual receive antenna.

The angle of arrival of the first virtual receive antenna may be determined based on the wave path difference between the first virtual receive antenna and the second virtual receive antenna that is determined based on the $i^{th}$ transmit antenna and the $j^{th}$ receive antenna.

It should be understood that, when $L_1 = R_1 = r_1$, it may be considered that the first transmit antenna and the first receive antenna are close to each other, that is, the reference transmit antenna and the reference receive antenna are close to each other. In this case, the first virtual receive antenna is the first receive antenna.

Optionally, when the angle of arrival is defined as an included angle between a center point (normal) of a receive antenna array and the target, the angle of arrival may be obtained by converting $\theta$ in FIG. 3 according to a known geometric relationship. As shown in FIG. 3, the angle of arrival $\theta$ of the first virtual receive antenna is obtained, the value $r_1$ of the distance between the reference receive antenna and the target is measured, and a distance between a center point O of the array and the first receive antenna is known as D/2, where D is a length of the antenna array of the MIMO radar. In this case, an angle $\theta_1$ between the target and the receive antenna array is obtained according to a cosine theorem, and the angle of arrival of the center point of the receive antenna array is finally obtained, that is,

$$\theta' = \frac{\pi}{2} - \theta_1.$$

FIG. 5 is a schematic diagram of a method for estimating an angle of arrival based on a wave path difference according to an embodiment of this application.

210. Determine a phase difference between a first virtual receive antenna and a second virtual receive antenna based on a wave path difference between the first virtual receive antenna and the second virtual receive antenna.

A phase difference between a signal that is transmitted by an $i^{th}$ transmit antenna and that is received by a $j^{th}$ receive antenna, that is, a signal received by the second virtual receive antenna and a signal that is transmitted by a reference receive antenna and that is received by a reference receive antenna, that is, a signal received by the first virtual receive antenna, may be represented as follows:

$$\varphi_{ij} = \frac{2\pi}{\lambda}((L_i + R_j) - (L_1 + R_1))$$

Herein, $\varphi_{ij}$ is the phase difference between the first virtual receive antenna and the second virtual receive antenna, $\lambda$ is an operating wavelength of a millimeter-wave radar, $R_1$ is a first distance between the reference receive antenna and a target, $L_1$ is a fourth distance between the reference transmit antenna and the target, $R_j$ is a second distance between the $j^{th}$ receive antenna and the target, and $L_i$ is a third distance between the $i^{th}$ transmit antenna and the target. 220. Construct a steering vector based on the phase difference between the first virtual receive antenna and the second virtual receive antenna

The steering vector $\mathbf{a}(\theta)$ is constructed based on the phase difference $\varphi_{ij}$, an element unit of the steering vector is $\mathbf{a}_{ij} = e^{-l\varphi_{ij}}$, $i = 1, 2, ..., M$, $j = 1, 2, ..., N$, and $l = \sqrt{-1}$.

That is, the steering vector may be represented as follows:

$$\mathbf{a}(\theta) = \begin{bmatrix} \mathbf{a}_{11} & \cdots & \mathbf{a}_{1j} \\ & \cdots & \\ \mathbf{a}_{i1} & \cdots & \mathbf{a}_{ij} \end{bmatrix}$$

230. Determine an angle of arrival based on the steering vector.

The angle of arrival $\theta$ of the first virtual receive antenna may be obtained through estimation based on the steering vector $\mathbf{a}(\theta)$.

Optionally, a steering vector algorithm such as a digital beamforming (digital beamforming, DBF) algorithm, a minimum variance distortionless response (minimum variance distortionless response, MVDR) algorithm, or a multiple signal classification (MUSIC) algorithm may be used. For example, when the angle of arrival is estimated by using the DBF algorithm, an angular spectrum may be represented as follows:

$$S = \mathbf{a}(\theta)^H x * x^H \mathbf{a}(\theta)$$

Herein, x represents a received signal vector that is input to the DBF algorithm, $\mathbf{a}(\theta)$ represents the steering vector constructed in step 220, and H represents conjugate transposition. The constructed $\mathbf{a}(\theta)$ is substituted into the foregoing formula. Angles are searched for, that is, angle values of the angle of arrival are enumerated. Therefore, when a value in the angular spectrum is a maximum value or a local maximum value, it may be determined that an angle of arrival of the target is obtained through estimation.

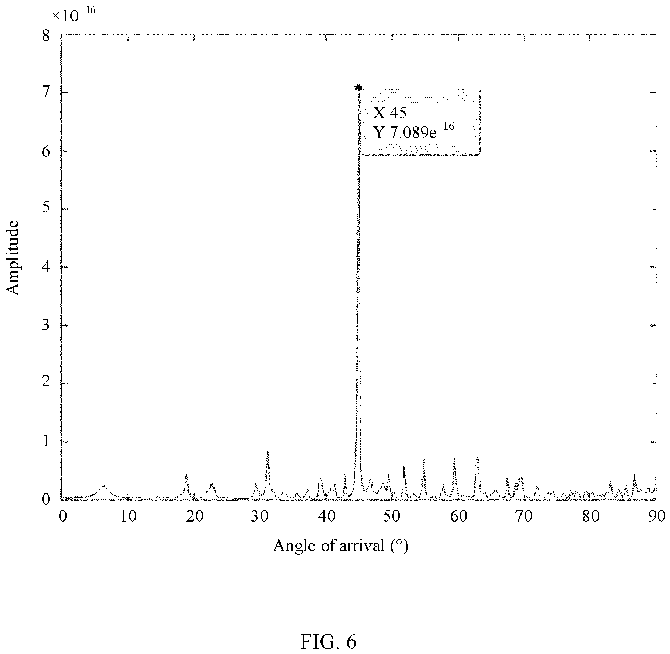

FIG. 6 is a schematic diagram of an angle of arrival estimation result according to an embodiment of this application. As shown in FIG. 6, a virtual receive antenna formed in a radar may be a large array including 256 virtual receive antenna array elements. After near field estimation is used, an angle of arrival of a near field first virtual receive antenna can still be accurately estimated. As shown in FIG. 6, the virtual receive antenna array includes 256 virtual array elements. When a DBF angle estimation algorithm is used and a signal noise ratio (signal noise ratio, SNR) is 15 dB, according to the technical solution provided in this embodiment of this application, when a value of an angle of arrival is 45°, an amplitude of the angle of arrival is $7.098e^{-16}$, that is, a maximum value of the amplitude in an angular spectrum. In other words, the angle of arrival of 45° is accurately estimated, and angular spectrum dispersion does not occur.

This application further provides a simpler angle of arrival estimation method. To be specific, a distance between a transmit antenna and a target is no longer calculated, but an interval between array elements of a virtual receive antenna arrays is used as a variable (no longer used as a constant) to estimate an angle of arrival.

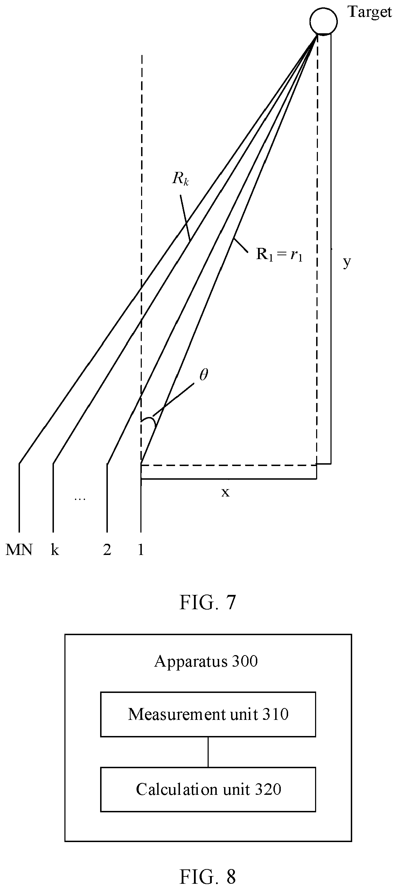

FIG. 7 is a schematic diagram of a virtual receive antenna according to an embodiment of this application. FIG. 7 shows M×N virtual receive antennas determined based on M transmit antennas and N receive antennas. Herein, $\theta$ is an angle of arrival, and may be an included angle between a first receive antenna and a target. The first receive antenna is selected as a reference receive antenna. In this case, the first receive antenna may be a first receive antenna from right to left in a receive antenna array.

Similar to the method shown in FIG. 4, step 140 may be replaced with the following method:
A first distance $R_1$ between the reference receive antenna (a first virtual receive antenna) and the target is measured. $R_1 = r_1$, and $r_1$ is a measured value of the distance between the reference receive antenna and the target, that is, a specific value. It is assumed that transmit antennas that determine all virtual receive antennas are a same transmit antenna. In this case, because a distance between the transmit antenna that forms all virtual receive antennas and a target are the same, a wave path difference between a second virtual receive antenna and the first virtual receive antenna does not change due to different locations of the transmit antenna that determines the virtual receive antennas. To be specific, the wave path difference between the first virtual receive antenna and the second virtual receive antenna may be determined based on the first distance $R_1$ between the reference receive antenna and the target. In this case, the second virtual receive antenna is a $k^{th}$ virtual receive antenna, and a wave path difference between the $k^{th}$ virtual receive antenna and the first virtual receive antenna is as follows:

$$R_k - R_1 = \sqrt{(r_1 \sin\theta + (k-1)d)^2 + (r_1 \cos\theta)^2} - r_1$$

Herein, $R_k$ is a distance between the second virtual receive antenna and the target. It is assumed that the virtual receive antennas are arranged at equal intervals in this case, and d is an interval between adjacent array elements in the virtual receive antenna array.

In a far field case, an interval d between adjacent array elements in the virtual receive antenna array is a constant related to an operating wavelength, and may be a half of a wavelength corresponding to an operating center frequency of the radar. In a near field case, an interval d between adjacent array elements in the virtual receive antenna array is a variable related to an angle of arrival of the first virtual receive antenna.

Optionally, the wave path difference shown in this embodiment may be substituted into the angle of arrival estimation method shown in FIG. 5. In this case, a phase difference is as follows:

$$\varphi_k = \frac{2\pi}{\lambda}(\sqrt{(r_1 \sin\theta + (k-1)d)^2 + (r_1 \cos\theta)^2} - r_1)$$

Herein, $\lambda$ is an operating wavelength of the millimeter-wave radar, $r_1$ is a value of a distance between the reference receive antenna and the target, $\theta$ is the angle of arrival of the first virtual receive antenna, d is a half wavelength of the millimeter-wave radar, the $k^{th}$ virtual receive antenna is the second virtual receive antenna, and k is a positive integer less than or equal to M×N.

When the antenna array is small, a steering vector constructed according to the foregoing formula can implement better estimation performance in angle of arrival estimation in the near field.

As an aperture of the antenna array of the MIMO radar increases, in a near field condition, a formula is as follows:

$$\varphi_k = \frac{2\pi}{\lambda}(\sqrt{(r_1 \sin\theta + (k-1)d)^2 + (r_1 \cos\theta)^2} - r_1)$$

An interval d between adjacent array elements in the virtual receive antenna array is no longer a half wavelength, but is a variable, and (k-1)d in the foregoing formula may be replaced with $d_k(\theta) = \sum_{q=1}^{k} d_q(\theta)$ . In this case, the phase difference may be represented as follows:

$$\varphi_k = \frac{2\pi}{\lambda}(\sqrt{(r_1 \sin\theta + \sum_{q=1}^{k} d_q(\theta))^2 + (r_1 \cos\theta)^2} - r_1)$$

Herein, $d_q(\theta)$ represents a distance between a $q^{th}$ virtual receive antenna and a $(q-1)^{th}$ virtual receive antenna when the angle of arrival of the first virtual receive antenna is $\theta$.

It can be learned from the foregoing formula that $d_q(\theta)$ is related to a location of the target, that is, related to the first distance between the target and the reference receive antenna.

Therefore, a relationship between $d_q(\theta)$, $\theta$, and $r_1$ may be established through simulation and/or actual measurement according to the method shown in FIG. 4. To be specific, a correspondence table of {$d_q(\theta)$, $\theta$, and $r_1$} is established in advance, and the angle of arrival may be accurately estimated by using this method.

For example, a relationship between $d_q(\theta)$, $\theta$, and $r_1$ may be shown in Table 1. When the angle of arrival is estimated by using the DBF angle estimation algorithm, a corresponding value in Table 1 may be substituted into when angle values of the angle of arrival are enumerated, to obtain a maximum value or a local maximum value in an angular spectrum, so as to accurately estimate the angle of arrival.

**Table 1**

| $r_1$ (m) | $\theta$ (°) | $d_q(\theta)$ (m) |
|---|---|---|
| 10 | 1 | $d_1(\theta) = x_1$, $d_2(\theta) = x_2$, $d_3(\theta) = x_3$, ... |
| 10 | 2 | $d_1(\theta) = x_4$, $d_2(\theta) = x_5$, $d_3(\theta) = x_6$, ... |
| 10 | 3 | $d_1(\theta) = x_7$, $d_2(\theta) = x_8$, $d_3(\theta) = x_9$, ... |
| 10 | 4 | $d_1(\theta) = x_{10}$, $d_2(\theta) = x_{11}$, $d_3(\theta) = x_{12}$, ... |
| ... | ... | ... |

Herein, when values of $\theta$ and $r_1$ are determined, $x_1$, $x_4$, $x_7$, and $x_{10}$ each represent a distance between a first virtual receive antenna and a $0^{th}$ virtual receive antenna, $x_2$, $x_5$, $x_8$, and $x_{11}$ each represent a distance between a second virtual receive antenna and the first virtual receive antenna, and $x_3$, $x_6$, $x_9$, and $x_{12}$ each represent a distance between a third virtual receive antenna and the second virtual receive antenna.

Optionally, the related data in Table 1 may be stored in the memory 114 shown in FIG. 1.

It is assumed that an aperture of a virtual receive antenna is D, and a wavelength of an operating frequency band is $\lambda$. A commonly-used near-field determining formula is as follows: $D^2/\lambda$ = 64.1 m (It is assumed that D = 0.5, and $\lambda$ = 0.0039 m). Therefore, common microwave anechoic chambers are applicable to near-field conditions.

The wave path difference/steering vector constructing method in embodiments of this application may also be applied to antenna array calibration. Specifically, a phase calibration coefficient for calibration of the antenna array of the MIMO radar is determined based on the phase difference and a measured value of a phase difference existing before calibration. A phase calibration coefficient $\Delta\varphi_{k,near}$ of the $k^{th}$ receive antenna satisfies the following formula:

$$\Delta\varphi_{k,near} = \varphi_{k,near} - \varphi'_{k,near}$$

Herein, $\varphi_{k,near}$ is a theoretical value, that is, the phase difference $\varphi_k$ or $\varphi_{ij}$ in the foregoing embodiment, and $\varphi'_{k,near}$ is a measured value of a phase difference existing before calibration.

It should be understood that the phase calibration coefficient that is obtained through calculation by using the theoretical wave path difference/phase difference in embodiments of this application is more accurate, so that an angle of arrival estimation result with a higher accuracy can be obtained.

A near field calibration parameter obtained in embodiments of this application may also be extended to a far field calibration parameter. For a same radar, a far field calibration result can be calculated based on a near field calibration result.

Optionally, in the foregoing near field angle of arrival calibration method, a near field calibration result may be directly used for far field calibration. The reasons are as follows: $(\varphi'_{k,near}(\theta)+\Delta\varphi_n)$ is an observed phase in the near field calibration. $\varphi'_{k,near}(\theta)$ is a real antenna phase of the $k^{th}$ antenna without antenna disturbance in a near field condition, and $x_k$ indicates phase disturbance of the $k^{th}$ antenna and a radio frequency channel of the $k^{th}$ antenna. $(\varphi'_{k,far}(\theta)+\Delta\varphi_f)$ is an observed phase in the far field calibration. $\varphi'_{k,far}(\theta)$ is a real antenna phase of the $k^{th}$ antenna without antenna disturbance in a far field condition, and $y_k$ indicates a phase disturbance of the $k^{th}$ antenna and the radio frequency channel of the $k^{th}$ antenna. Formulas are as follows:

$$\left(\varphi'_{k,near}\left(\theta\right)+\Delta\varphi_n\right)+x_k=\varphi_{k,near}$$

$$\left(\varphi'_{k,far}\left(\theta\right)+\Delta\varphi_f\right)+y_k=\varphi_{k,far}$$

After radar calibration in the near field, $x_k = -\Delta\varphi_n$, and in some scenarios, $\Delta\varphi_f = \Delta\varphi_n$, and therefore $x_k = y_k$.

FIG. 8 is a schematic diagram of an angle of arrival estimation apparatus according to an embodiment of this application. The apparatus may be located in a MIMO radar, and is configured to measure an angle of arrival to a target.

As shown in FIG. 8, the angle of arrival estimation apparatus may include a measurement unit 310 and a calculation unit 320.

The measurement unit 310 is configured to measure a first distance between a reference receive antenna and a target, where the reference receive antenna is one of the N receive antennas. The calculation unit 320 is configured to determine a second distance between a $j^{th}$ receive antenna and the target based on the first distance, where j is a positive integer less than or equal to N. The calculation unit 320 may be further configured to determine a wave path difference between the first virtual receive antenna and the second virtual receive antenna based on the first distance and the second distance, where a reference transmit antenna is one of the M transmit antennas. The first virtual receive antenna is determined based on a reference transmit antenna and the reference receive antenna, the second virtual receive antenna is determined based on an $i^{th}$ transmit antenna and the $j^{th}$ receive antenna, and i is a positive integer less than or equal to M. The calculation unit 320 is further configured to determine an angle of arrival of the first virtual receive antenna based on the wave path difference.

Optionally, that the calculation unit 320 may be further configured to determine a wave path difference between the first virtual receive antenna and the second virtual receive antenna based on the first distance and the second distance includes: determining a first wave path of the first virtual receive antenna; determining a second wave path of the second virtual receive antenna; and determining the wave path difference between the first virtual receive antenna and the second virtual receive antenna based on the first wave path and the second wave path. That the determining a second wave path of the second virtual receive antenna may include: determining a third distance between the $i^{th}$ transmit antenna and the target based on the first distance; and determining the second wave path of the second virtual receive antenna based on the second distance and the third distance.

Optionally, the determining a first wave path of the first virtual receive antenna includes: determining a fourth distance between the reference transmit antenna and the target based on the first distance; and determining the first wave path of the first virtual receive antenna based on the first distance and the fourth distance.

Optionally, that the calculation unit 320 is configured to determine a second distance between a $j^{th}$ receive antenna and the target based on the first distance includes: determining the second distance between the $j^{th}$ receive antenna and the target based on the first distance and a fifth distance between the reference receive antenna and the $j^{th}$ receive antenna.

Optionally, the N receive antennas are arranged at equal intervals.

Optionally, the calculation unit 320 may be further configured to determine an angle of arrival of the first virtual receive antenna based on the wave path difference includes: determining a phase difference between the first virtual receive antenna and the second virtual receive antenna based on the wave path difference; constructing a steering vector based on the phase difference; and determining the angle of arrival of the first virtual receive antenna based on the steering vector.

Optionally, the phase difference satisfies the following formula:

$$\varphi_{ij} = \frac{2\pi}{\lambda}((L_i + R_j) - (L_1 + R_1))$$

Herein, $\varphi_{ij}$ is the phase difference between the first virtual receive antenna and the second virtual receive antenna, $\lambda$ is an operating wavelength of the antenna array of the MIMO radar, $R_1$ is the first distance, $R_j$ is the second distance, $L_1$ is the fourth distance, and $L_i$ is the third distance.

Optionally, the phase difference satisfies the following formula:

$$\varphi_k = \frac{2\pi}{\lambda}(\sqrt{(r_1 \sin\theta + (k-1)d)^2 + (r_1 \cos\theta)^2} - r_1)$$

Herein, $\varphi_k$ is the phase difference between the first virtual receive antenna and the second virtual receive antenna, $\lambda$ is an operating wavelength of the antenna array of the MIMO radar, $r_1$ is a measured value of the first distance, $\theta$ is the angle of arrival of the first virtual receive antenna, d is a half wavelength of the antenna array of the MIMO radar, a $k^{th}$ virtual receive antenna is the second virtual receive antenna, and k is a positive integer less than or equal to MN.

Optionally, the phase difference satisfies the following formula:

$$\varphi_k = \frac{2\pi}{\lambda}(\sqrt{(r_1 \sin\theta + \sum_{q=1}^{k} d_q(\theta))^2 + (r_1 \cos\theta)^2} - r_1)$$

Herein, $d_q(\theta)$ is a distance between a $q^{th}$ virtual receive antenna and a $(q-1)^{th}$ virtual receive antenna when the angle of arrival is $\theta$.

Optionally, the calculation unit 320 is further configured to determine a phase calibration coefficient for calibration of the antenna array of the MIMO radar based on the phase difference and a measured value of a phase difference existing before calibration.

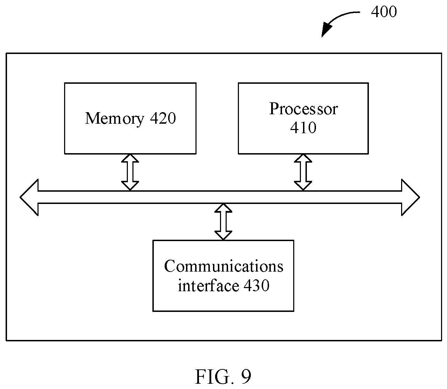

FIG. 9 is a schematic diagram of a structure of an angle of arrival estimation apparatus according to an embodiment of this application. The apparatus 400 may be an angle of arrival estimation apparatus, or may be a chip or a circuit disposed in the angle of arrival estimation apparatus. For example, the apparatus 400 may be a router or a switch, or a chip in a router or a switch.

As shown in FIG. 9, the apparatus 400 includes a processor 410, a memory 420, and a communications interface 430. The memory 420 stores instructions, and the processor 410 is configured to execute the instructions in the memory 420. When the instructions are executed, the processor 410 is configured to perform the method provided in the foregoing method embodiment. The processor 410 is further configured to control the communications interface 430 to communicate with the outside world.

Further, the processor 410, the memory 420, and the communications interface 430 may communicate with each other through an internal connection path, to transmit a control signal and/or a data signal.

The memory 420 may be integrated into the processor 410, or the memory 420 and the processor 410 may be separately disposed.

Specifically, the angle of arrival estimation apparatus 400 may be configured to perform the steps of the methods in FIG. 3 and FIG. 4, and the apparatus 400 may include modules configured to perform the methods performed by the angle of arrival estimation apparatus in FIG. 3 and FIG. 4. In addition, the modules in the apparatus 400 and the foregoing other operations and/or functions are separately used to implement corresponding procedures in FIG. 3 and FIG. 4. A specific process in which the modules perform the foregoing corresponding steps is described in detail in the method. For brevity, the details are not described herein again.

An embodiment of this application further provides a computer-readable storage medium, the computer-readable storage medium includes a computer program, and when the computer program is run on a computer, the computer is enabled to perform the methods provided in the foregoing method embodiments.

An embodiment of this application further provides a computer program product including instructions, and when the computer program product is run on a computer, the computer is enabled to perform the methods provided in the foregoing method embodiments.

An embodiment of this application further provides a chip system. The chip system includes a memory and a processor. The memory is configured to store a computer program, and the processor is configured to invoke the computer program from the memory and run the computer program, so that a network device on which the chip system is installed performs the method provided in the foregoing method embodiments.

The chip system may include an input circuit or interface configured to send information or data, and an output circuit or interface configured to receive information or data.

It should be understood that, the processor in the embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may further be any conventional processor, or the like.

A person of ordinary skill in the art may be aware that, in combination with the units and algorithm steps in the examples described in embodiments disclosed in this specification, this application can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate. Parts displayed as units may or may not be physical units, to be specific, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Therefore, the protection scope of this application shall be subject to the protection scope of the claims.

## Claims

1. An angle of arrival estimation method, applied to a multiple-input multiple-output, MIMO radar, wherein an antenna array of the MIMO radar comprises M transmit antennas and N receive antennas, M is a positive integer, and N is a positive integer; and the method comprises:

   measuring (110) a first distance between a reference receive antenna and a target, wherein the reference receive antenna is one of the N receive antennas;
   determining (120) a second distance between a $j^{th}$ receive antenna and the target based on the first distance, wherein j is a positive integer less than or equal to N;
   determining (130) a wave path difference between a first virtual receive antenna and a second virtual receive antenna based on the first distance and the second distance, wherein the first virtual receive antenna is determined based on a reference transmit antenna and the reference receive antenna, the reference transmit antenna is one of the M transmit antennas, the second virtual receive antenna is determined based on an $i^{th}$ transmit antenna and the $j^{th}$ receive antenna, and i is a positive integer less than or equal to M; and
determining (140) an angle of arrival of the first virtual receive antenna based on the wave path difference;
**characterized in that**
the determining an angle of arrival of the first virtual receive antenna based on the wave path difference comprises:

determining a phase difference between the first virtual receive antenna and the second virtual receive antenna based on the wave path difference;
constructing a steering vector based on the phase difference; and
determining the angle of arrival of the first virtual receive antenna based on the steering vector, wherein the phase difference satisfies the following formula:

$$\varphi_k = \frac{2\pi}{\lambda} \left( \sqrt{(r_1 \sin\theta + (k-1)d)^2 + (r_1 \cos\theta)^2} - r_1 \right)$$,

wherein
$\varphi_k$ is the phase difference between the first virtual receive antenna and the second virtual receive antenna, $\lambda$ is an operating wavelength of the antenna array of the MIMO radar, $r_1$ is a measured value of the first distance, $\theta$ is the angle of arrival of the first virtual receive antenna, d is a half wavelength of the antenna array of the MIMO radar, a $k^{th}$ virtual receive antenna is the second virtual receive antenna, and k is a positive integer less than or equal to M × N;
wherein the method further comprises:

performing accurate estimation based on the phase difference, wherein the phase difference satisfies the following formula:

$$\varphi_k = \frac{2\pi}{\lambda} \left( \sqrt{(r_1 \sin\theta + \sum_{q=1}^{k} d_q(\theta))^2 + (r_1 \cos\theta)^2} - r_1 \right)$$,

wherein
$d_q(\theta)$ is a distance between a $q^{th}$ virtual receive antenna and a $(q-1)^{th}$ virtual receive antenna when the angle of arrival is $\theta$.

2. The method according to any one of claim 1, wherein the determining a second distance between a $j^{th}$ receive antenna and the target based on the first distance comprises:
determining the second distance between the $j^{th}$ receive antenna and the target based on the first distance and a fifth distance between the reference receive antenna and the $j^{th}$ receive antenna.

3. The method according to claim 2, wherein the N receive antennas are arranged at equal intervals.

4. The method according to claim 1, wherein the method further comprises:
determining a phase calibration coefficient for calibration of the antenna array of the MIMO radar based on the phase difference and a measured value of a phase difference existing before calibration.

5. An angle of arrival estimation apparatus (300), located in a MIMO radar, wherein an antenna array of the MIMO radar comprises M transmit antennas and N receive antennas, M is a positive integer, and N is a positive integer; and the apparatus comprises:

a measurement unit (310), configured to measure a first distance between a reference receive antenna and a target, wherein the reference receive antenna is one of the N receive antennas; and
a calculation unit (320), configured to determine a second distance between a $j^{th}$ receive antenna and the target based on the first distance, wherein j is a positive integer less than or equal to N;

the calculation unit is further configured to determine a wave path difference between a first virtual receive antenna and a second virtual receive antenna based on the first distance and the second distance, wherein a reference transmit antenna is one of the M transmit antennas, the first virtual receive antenna is determined based on the reference transmit antenna and the reference receive antenna, the second virtual receive antenna is determined based on an ith transmit antenna and the jth receive antenna, and i is a positive integer less than or equal to M; and

the calculation unit is further configured to determine an angle of arrival of the first virtual receive antenna based on the wave path difference;

**characterized in that**

that the calculation unit is further configured to determine an angle of arrival of the first virtual receive antenna based on the wave path difference comprises:

determining a phase difference between the first virtual receive antenna and the second virtual receive antenna based on the wave path difference;
constructing a steering vector based on the phase difference; and
determining the angle of arrival of the first virtual receive antenna based on the steering vector, wherein the phase difference satisfies the following formula:

$$\varphi_k = \frac{2\pi}{\lambda}\left(\sqrt{(r_1\sin\theta + (k-1)d)^2 + (r_1\cos\theta)^2} - r_1\right),$$

wherein

$\varphi_k$ is the phase difference between the first virtual receive antenna and the second virtual receive antenna, $\lambda$ is an operating wavelength of the antenna array of the MIMO radar, $r_1$ is a measured value of the first distance, $\theta$ is the angle of arrival of the first virtual receive antenna, d is a half wavelength of the antenna array of the MIMO radar, a kth virtual receive antenna is the second virtual receive antenna, and k is a positive integer less than or equal to M × N; wherein the calculation unit is further configured to perform accurate estimation based on the phase difference, wherein the phase difference satisfies the following formula:

$$\varphi_k = \frac{2\pi}{\lambda}\left(\sqrt{\left(r_1\sin\theta + \sum_{q=1}^{k} d_q(\theta)\right)^2 + (r_1\cos\theta)^2} - r_1\right)$$

;

wherein $d_q(\Theta)$ is a distance between a qth virtual receive antenna and a (q-1)th virtual receive antenna when the angle of arrival is $\Theta$.

6. The apparatus according to claim 5, wherein that the calculation unit is configured to determine a second distance between a jth receive antenna and the target based on the first distance comprises:
determining the second distance between the jth receive antenna and the target based on the first distance and a fifth distance between the reference receive antenna and the jth receive antenna.

7. The apparatus according to claim 6, wherein the N receive antennas are arranged at equal intervals.

8. The apparatus according to claim 5, wherein the calculation unit is further configured to:
determine a phase calibration coefficient for calibration of the antenna array of the MIMO radar based on the phase difference and a measured value of a phase difference existing before calibration.

**Patentansprüche**

1. Verfahren zur Einfallswinkelschätzung, das auf ein Multiple-Input Multiple-Output-Radar, MIMO-Radar, angewendet wird, wobei ein Antennenarray des MIMO-Radars M Sendeantennen und N Empfangsantennen umfasst, M eine positive ganze Zahl ist und N eine positive ganze Zahl ist; und das Verfahren Folgendes umfasst:

Messen (110) eines ersten Abstands zwischen einer Referenz-Empfangsantenne und einem Ziel, wobei die Referenz-Empfangsantenne eine der N Empfangsantennen ist;

Bestimmen (120) eines zweiten Abstands zwischen einer j-ten Empfangsantenne und dem Ziel basierend auf dem ersten Abstand, wobei j eine positive ganze Zahl ist, die kleiner oder gleich N ist;

Bestimmen (130) einer Wellenwegdifferenz zwischen einer ersten virtuellen Empfangsantenne und einer zweiten virtuellen Empfangsantenne basierend auf dem ersten Abstand und dem zweiten Abstand, wobei die erste virtuelle Empfangsantenne basierend auf einer Referenz-Sendeantenne und der Referenz-Empfangsantenne bestimmt wird, die Referenz-Sendeantenne eine der M Sendeantennen ist, die zweite virtuelle Empfangsantenne basierend auf einer i-ten Sendeantenne und der j-ten Empfangsantenne bestimmt wird und i eine positive ganze Zahl ist, die kleiner oder gleich M ist; und Bestimmen (140) eines Einfallswinkels der ersten virtuellen Empfangsantenne basierend auf der Wellenwegdifferenz;

**dadurch gekennzeichnet, dass**

das Bestimmen eines Einfallswinkels der ersten virtuellen Empfangsantenne basierend auf der Wellenwegdifferenz Folgendes umfasst:

Bestimmen einer Phasendifferenz zwischen der ersten virtuellen Empfangsantenne und der zweiten virtuellen Empfangsantenne basierend auf der Wellenwegdifferenz;

Konstruieren eines Lenkvektors basierend auf der Phasendifferenz; und

Bestimmen des Einfallswinkels der ersten virtuellen Empfangsantenne basierend auf dem Lenkvektor, wobei die Phasendifferenz die folgende Formel erfüllt:

$$\varphi_k = \frac{2\pi}{\lambda}\left(\sqrt{(r_1 \sin\theta + (k-1)d)^2 + (r_1 \cos\theta)^2} - r_1\right),$$

wobei

$\varphi_k$ die Phasendifferenz zwischen der ersten virtuellen Empfangsantenne und der zweiten virtuellen Empfangsantenne ist, $\lambda$ eine Betriebswellenlänge des Antennenarrays des MIMO-Radars ist, $r_1$ ein gemessener Wert des ersten Abstands ist, $\theta$ der Einfallswinkel der ersten virtuellen Empfangsantenne ist, d eine halbe Wellenlänge des Antennenarrays des MIMO-Radars ist, eine k-ten virtuelle Empfangsantenne die zweite virtuelle Empfangsantenne ist und k eine positive ganze Zahl ist, die kleiner oder gleich M × N ist;

wobei das Verfahren ferner Folgendes umfasst:

Durchführen einer genauen Schätzung basierend auf der Phasendifferenz, wobei die Phasendifferenz die folgende Formel erfüllt:

$$\varphi_k = \frac{2\pi}{\lambda}\sqrt{(r_1 \sin\theta + \sum_{q=1}^{k} d_q(\theta))^2 + (r_1 \cos\theta)^2} - r_1,$$

wobei

$d_q(\theta)$ ein Abstand zwischen einer q-ten virtuellen Empfangsantenne und einer (q-1)-ten virtuellen Empfangsantenne ist, wenn der Einfallswinkel $\theta$ beträgt.

2. Verfahren nach einem der Ansprüche 1, wobei das Bestimmen eines zweiten Abstands zwischen einer j-ten Empfangsantenne und dem Ziel basierend auf dem ersten Abstand Folgendes umfasst:
Bestimmen des zweiten Abstands zwischen der j-ten Empfangsantenne und dem Ziel basierend auf dem ersten Abstand und einem fünften Abstand zwischen der Referenz-Empfangsantenne und der j-ten Empfangsantenne.

3. Verfahren nach Anspruch 2, wobei die N Empfangsantennen in gleichen Abständen angeordnet sind.

4. Verfahren nach Anspruch 1, wobei das Verfahren ferner Folgendes umfasst:
Bestimmen eines Phasenkalibrierungskoeffizienten zur Kalibrierung des Antennenarrays des MIMO-Radars basierend auf der Phasendifferenz und einem Messwert einer vor der Kalibrierung bestehenden Phasendifferenz.

5. Vorrichtung (300) zur Einfallswinkelschätzung, die sich in einem MIMO-Radar befindet, wobei ein Antennenarray des MIMO-Radars M Sendeantennen und N Empfangsantennen umfasst, M eine positive ganze Zahl ist und N eine positive ganze Zahl ist; und die Vorrichtung Folgendes umfasst:

eine Messeinheit (310), die dazu konfiguriert ist, einen ersten Abstand zwischen einer Referenz-Empfangsantenne und einem Ziel zu messen, wobei die Referenz-Empfangsantenne eine der N Empfangsantennen ist; und eine Berechnungseinheit (320), die dazu konfiguriert ist, einen zweiten Abstand zwischen einer $j$-ten Empfangsantenne und dem Ziel basierend auf dem ersten Abstand zu bestimmen, wobei $j$ eine positive ganze Zahl ist, die kleiner oder gleich N ist;

die Berechnungseinheit ferner dazu konfiguriert ist, eine Wellenwegdifferenz zwischen einer ersten virtuellen Empfangsantenne und einer zweiten virtuellen Empfangsantenne basierend auf dem ersten Abstand und dem zweiten Abstand zu bestimmen, wobei eine Referenz-Sendeantenne eine der M Sendeantennen ist, die erste virtuelle Empfangsantenne basierend auf der Referenz-Sendeantenne und der Referenz-Empfangsantenne bestimmt wird, die zweite virtuelle Empfangsantenne basierend auf einer $i$-ten Sendeantenne und der $j$-ten Empfangsantenne bestimmt wird und $i$ eine positive ganze Zahl ist, die kleiner oder gleich M ist; und

die Berechnungseinheit ferner dazu konfiguriert ist, einen Einfallswinkel der ersten virtuellen Empfangsantenne basierend auf der Wellenwegdifferenz zu bestimmen;

**dadurch gekennzeichnet, dass**

der Umstand, dass die Berechnungseinheit ferner dazu konfiguriert ist, einen Einfallswinkel der ersten virtuellen Empfangsantenne basierend auf der Wellenwegdifferenz zu bestimmen, Folgendes umfasst:

Bestimmen einer Phasendifferenz zwischen der ersten virtuellen Empfangsantenne und der zweiten virtuellen Empfangsantenne basierend auf der Wellenwegdifferenz;

Konstruieren eines Lenkvektors basierend auf der Phasendifferenz; und

Bestimmen des Einfallswinkels der ersten virtuellen Empfangsantenne basierend auf dem Lenkvektor, wobei die Phasendifferenz die folgende Formel erfüllt:

$$\varphi_k = \frac{2\pi}{\lambda}\left(\sqrt{(r_1 \sin\theta + (k-1)d)^2 + (r_1 \cos\theta)^2} - r_1\right),$$

wobei

$\varphi_k$ die Phasendifferenz zwischen der ersten virtuellen Empfangsantenne und der zweiten virtuellen Empfangsantenne ist, $\lambda$ eine Betriebswellenlänge des Antennenarrays des MIMO-Radars ist, $r_1$ ein gemessener Wert der ersten Entfernung ist, $\theta$ der Einfallswinkel der ersten virtuellen Empfangsantenne ist, $d$ eine halbe Wellenlänge des Antennenarrays des MIMO-Radars ist, eine $k$-te virtuelle Empfangsantenne die zweite virtuelle Empfangsantenne ist und $k$ eine positive ganze Zahl ist, die kleiner oder gleich M $\times$ N ist; wobei die Berechnungseinheit ferner dazu konfiguriert ist, eine genaue Schätzung basierend auf der Phasendifferenz durchzuführen, wobei die Phasendifferenz die folgende Formel erfüllt:

$$\varphi_k = \frac{2\pi}{\lambda}\sqrt{(r_1 \sin\theta + \sum_{q=1}^{k} d_q(\theta))^2 + (r_1 \cos\theta)^2} - r_1,$$

wobei $d_q(\theta)$ ein Abstand zwischen einer $q$-ten virtuellen Empfangsantenne und einer $(q-1)$-ten virtuellen Empfangsantenne ist, wenn der Einfallswinkel $\theta$ beträgt.

6. Vorrichtung nach Anspruch 5, wobei der Umstand, dass die Berechnungseinheit dazu konfiguriert ist, einen zweiten Abstand zwischen einer $j$-ten Empfangsantenne und dem Ziel basierend auf dem ersten Abstand zu bestimmen, Folgendes umfasst:
Bestimmen des zweiten Abstands zwischen der $j$-ten Empfangsantenne und dem Ziel basierend auf dem ersten Abstand und einem fünften Abstand zwischen der Referenz-Empfangsantenne und der $j$-ten Empfangsantenne.

7. Vorrichtung nach Anspruch 6, wobei die N Empfangsantennen in gleichen Abständen angeordnet sind.

8. Vorrichtung nach Anspruch 5, wobei die Berechnungseinheit ferner dazu konfiguriert ist:
einen Phasenkalibrierungskoeffizienten zur Kalibrierung des Antennenarrays des MIMO-Radars basierend auf der Phasendifferenz und einem Messwert einer vor der Kalibrierung bestehenden Phasendifferenz zu bestimmen.

**Revendications**

1. Procédé d'estimation d'angle d'arrivée, appliqué à un radar à entrées multiples et sorties multiples (MIMO) dans lequel un réseau d'antennes du radar MIMO comprend M antennes d'émission et N antennes de réception, M est un nombre entier positif et N est un nombre entier positif ; et le procédé comprend :

la mesure (110) d'une première distance entre une antenne de réception de référence et une cible, dans lequel l'antenne de réception de référence est l'une des N antennes de réception ;
la détermination (120) d'une deuxième distance entre une j$^{ème}$ antenne de réception et la cible sur la base de la première distance, dans lequel j est un nombre entier positif inférieur ou égal à N ;
la détermination (130) d'une différence de trajet d'onde entre une première antenne de réception virtuelle et une seconde antenne de réception virtuelle sur la base de la première distance et de la deuxième distance, dans lequel la première antenne de réception virtuelle est déterminée sur la base d'une antenne d'émission de référence et de l'antenne de réception de référence, l'antenne d'émission de référence est l'une des M antennes d'émission, la seconde antenne de réception virtuelle est déterminée sur la base d'une i$^{ème}$ antenne d'émission et de la j$^{ème}$ antenne de réception, et i est un nombre entier positif inférieur ou égal à M ; et
la détermination (140) d'un angle d'arrivée de la première antenne de réception virtuelle sur la base de la différence de trajet d'onde ;
**caractérisé en ce que**
la détermination d'un angle d'arrivée de la première antenne de réception virtuelle sur la base de la différence de trajet d'onde comprend :

la détermination d'une différence de phase entre la première antenne de réception virtuelle et la seconde antenne de réception virtuelle sur la base de la différence de trajet d'onde ;
la construction d'un vecteur de direction sur la base de la différence de phase ; et
la détermination de l'angle d'arrivée de la première antenne de réception virtuelle sur la base du vecteur de direction, dans lequel
la différence de phase satisfait la formule suivante :

$$\varphi_k = \frac{2\pi}{\lambda}\left(\sqrt{(r_1 \sin\theta + (k-1)d)^2 + (r_1 \cos\theta)^2} - r_1\right),$$

dans laquelle
$\varphi_k$ est la différence de phase entre la première antenne de réception virtuelle et la seconde antenne de réception virtuelle, $\lambda$ est une longueur d'onde de fonctionnement du réseau d'antennes du radar MIMO, $r_1$ est une valeur mesurée de la première distance, $\theta$ est l'angle d'arrivée de la première antenne de réception virtuelle, d est une demi-longueur d'onde du réseau d'antennes du radar MIMO, une k$^{ème}$ antenne de réception virtuelle est la seconde antenne de réception virtuelle, et k est un nombre entier positif inférieur ou égal à M × N ;
dans lequel le procédé comprend également :

la réalisation d'une estimation précise sur la base de la différence de phase, dans lequel la différence de phase satisfait la formule suivante :

$$\varphi_k = \frac{2\pi}{\lambda}\sqrt{(r_1 \sin\theta + \sum_{q=1}^{k} d_q(\theta))^2 + (r_1 \cos\theta)^2} - r_1,$$

dans laquelle $d_q(\theta)$ est une distance entre une q$^{ème}$ antenne de réception virtuelle et une (q-1)$^{ème}$ antenne de réception virtuelle lorsque l'angle d'arrivée est $\theta$.

2. Procédé selon la revendication 1, dans lequel la détermination d'une deuxième distance entre une j$^{ème}$ antenne de réception et la cible sur la base de la première distance comprend :
la détermination de la deuxième distance entre la j$^{ème}$ antenne de réception et la cible sur la base de la première distance et d'une cinquième distance entre l'antenne de réception de référence et la j$^{ème}$ antenne de réception.

3. Procédé selon la revendication 2, dans lequel les N antennes de réception sont disposées à intervalles égaux.

4. Procédé selon la revendication 1, dans lequel le procédé comprend également :
la détermination d'un coefficient d'étalonnage de phase pour l'étalonnage du réseau d'antennes du radar MIMO sur la base de la différence de phase et d'une valeur mesurée d'une différence de phase existant avant l'étalonnage.

5. Appareil d'estimation d'angle d'arrivée (300), situé dans un radar MIMO, dans lequel un réseau d'antennes du radar MIMO comprend M antennes d'émission et N antennes de réception, M est un nombre entier positif et N est un nombre entier positif ; et l'appareil comprend :

une unité de mesure (310), configurée pour mesurer une première distance entre une antenne de réception de référence et une cible, dans lequel l'antenne de réception de référence est l'une des N antennes de réception ; et
une unité de calcul (320), configurée pour déterminer une deuxième distance entre une jème antenne de réception et la cible sur la base de la première distance, dans lequel j est un nombre entier positif inférieur ou égal à N ;
l'unité de calcul est également configurée pour déterminer une différence de trajet d'onde entre une première antenne de réception virtuelle et une seconde antenne de réception virtuelle sur la base de la première distance et de la deuxième distance, dans lequel une antenne d'émission de référence est l'une des M antennes d'émission, la première antenne de réception virtuelle est déterminée sur la base de l'antenne d'émission de référence et de l'antenne de réception de référence, la seconde antenne de réception virtuelle est déterminée sur la base d'une ième antenne d'émission et de la jème antenne de réception, et i est un nombre entier positif inférieur ou égal à M ; et
l'unité de calcul est également configurée pour déterminer un angle d'arrivée de la première antenne de réception virtuelle sur la base de la différence de trajet d'onde ;
**caractérisé en ce que**
le fait que l'unité de calcul soit également configurée pour déterminer un angle d'arrivée de la première antenne de réception virtuelle sur la base de la différence de trajet d'onde comprend ;
la détermination d'une différence de phase entre la première antenne de réception virtuelle et la seconde antenne de réception virtuelle sur la base de la différence de trajet d'onde ;
la construction d'un vecteur de direction sur la base de la différence de phase ; et
la détermination de l'angle d'arrivée de la première antenne de réception virtuelle sur la base du vecteur de direction, dans lequel
la différence de phase satisfait la formule suivante :

$$\varphi_k = \frac{2\pi}{\lambda}\left(\sqrt{(r_1 \sin\theta + (k-1)d)^2 + (r_1 \cos\theta)^2} - r_1\right),$$

dans laquelle
$\varphi_k$ est la différence de phase entre la première antenne de réception virtuelle et la seconde antenne de réception virtuelle, $\lambda$ est une longueur d'onde de fonctionnement du réseau d'antennes du radar MIMO, $r_1$ est une valeur mesurée de la première distance, $\theta$ est l'angle d'arrivée de la première antenne de réception virtuelle, d est une demi-longueur d'onde du réseau d'antennes du radar MIMO, une kème antenne de réception virtuelle est la seconde antenne de réception virtuelle, et k est un nombre entier positif inférieur ou égal à M × N ; dans lequel l'unité de calcul est également configurée pour réaliser une estimation précise sur la base de la différence de phase, dans lequel la différence de phase satisfait la formule suivante :

$$\varphi_k = \frac{2\pi}{\lambda}\sqrt{(r_1 \sin\theta + \sum_{q=1}^{k} d_q(\theta))^2 + (r_1 \cos\theta)^2 - r_1},$$

dans laquelle $d_q(\theta)$ est une distance entre une qème antenne de réception virtuelle et une (q-1)ème antenne de réception virtuelle lorsque l'angle d'arrivée est $\theta$.

6. Appareil selon la revendication 5, dans lequel le fait que l'unité de calcul soit configurée pour déterminer une deuxième distance entre une jème antenne de réception et la cible sur la base de la première distance comprend :
la détermination de la deuxième distance entre la jème antenne de réception et la cible sur la base de la première distance et d'une cinquième distance entre l'antenne de réception de référence et la jème antenne de réception.

**7.** Appareil selon la revendication 6, dans lequel les N antennes de réception sont disposées à intervalles égaux.

**8.** Appareil selon la revendication 5, dans lequel l'unité de calcul est également configurée pour :
déterminer un coefficient d'étalonnage de phase pour l'étalonnage du réseau d'antennes du radar MIMO sur la base de la différence de phase et d'une valeur mesurée d'une différence de phase existant avant l'étalonnage.

Vehicle 100

**Travel system 102**
- Engine 118
- Transmission apparatus 120
- Energy source 119
- Wheels 121

**Sensor system 104**
- Global positioning system 122
- Inertial measurement unit 124
- Radar 126
- Laser rangefinder 128
- Camera 130

**Control system 106**
- Steering system 132
- Throttle 134
- Brake unit 136
- Computer vision system 140
- Route control system 142
- Obstacle avoidance system 144

**Peripheral devices 108**
- Wireless communications system 146
- Vehicle-mounted computer 148
- Microphone 150
- Speaker 152

Processor 113

Instructions 115

Memory 114

Computer system 112

Power supply 110

User interface 116

EP 4 080 235 B1

FIG. 1

FIG. 2

FIG. 3

EP 4 080 235 B1

| Measure a distance between a reference receive antenna and a target | 110 |

| Determine a distance between an $i^{th}$ receive antenna and the target and a distance between a $j^{th}$ transmit antenna and the target | 120 |

| Determine a wave path difference between a first virtual antenna and a second virtual antenna | 130 |

| Determine an angle of arrival | 140 |

FIG. 4

| Determine a phase path difference between a first virtual antenna and a second virtual antenna | 210 |

| Construct a steering vector | 220 |

| Determine an angle of arrival | 230 |

FIG. 5

FIG. 6

Target

$R_k$

$R_1 = r_1$

y

$\theta$

MN    k      2    1

x

FIG. 7

Apparatus 300

Measurement unit 310

Calculation unit 320

FIG. 8

400

Memory 420

Processor 410

Communications interface 430

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHARGE PASCAL et al.** *Near field targets localization using bistatic MIMO system with spherical wavefront based model*

- **DU JINZE et al.** *Bistatic MIMO System with Uniform Circular Arc Arrays for Single near Field Target Localization*
- **ZHANG YIMIN et al.** *MIMO radar exploiting narrowband frequency-hopping waveforms*